# EUROPÄISCHE PATENTSCHRIFT

(11) **EP 1 504 964 B1**
(45) Veröffentlichungstag und Bekanntmachung des Hinweises auf die Patenterteilung: **05.07.2006**
(21) Anmeldenummer: 04014208.5
(22) Anmeldetag: 17.06.2004
(51) Int. Cl.: B60R 16/02, B60Q 1/14, F16B 2/00

(54) **Befestigungseinrichtung zur Befestigung eines Lenkstockmoduls an einem Lenkstock und Lenkstockmodul**
Mounting device for fastening a steering column module on the steering column and a steering column module
Dispositif de fixation pour la fixation de module de colonne sur la colonne de direction et module de colonne

(30) Priorität: 01.07.2003 DE 10330481; 31.07.2003 DE 10336302
(43) Veröffentlichungstag der Anmeldung: 09.02.2005
(73) Patentinhaber: Valeo Schalter und Sensoren GmbH, 74321 Bietigheim-Bissingen (DE)
(72) Erfinder: Simonis, Karl, 75428 Illingen (DE); Lipfert, Rainer, 74076 Heilbronn (DE); Binder, Bernd, 74372 Sersheim (DE); Grüner, Roland, 71732 Tamm (DE); Hasch, Martin, 71701 Schwieberdingen (DE); Suchanek, Jürgen, 74363 Güglingen (DE)
(74) Vertreter: Dreiss, Fuhlendorf, Steimle & Becker

(56) Entgegenhaltungen:
- EP-A- 0 703 371
- EP-A- 1 199 223
- DE-A- 10 051 226
- FR-A- 2 749 354

## Beschreibung

Die Erfindung betrifft eine Befestigungseinrichtung zur Befestigung eines Lenkstockmoduls an einem Mantelrohr eines Lenkstocks und ein Lenkstockmodul.

Lenkstockmodule, die in der Regel im Bereich des Lenkrads eines Fahrzeuges angeordnet sind, weisen eine Reihe von Schaltern, wie beispielsweise Fahrtrichtungsschalter, Abblendlichtschalter, Aufblendlichtschalter, Scheibenwischerschalter oder dergleichen auf. Ferner können die Lenkstockmodule Lenkwinkelsensoren beherbergen, mit denen der Verdrehwinkel der Lenksäule erfasst werden kann. Außerdem dienen die Lenkstockmodule zur Aufnahme einer sogenannten Wickelfeder, mit der Signale, die lenkradseitig erzeugt werden, zu mit dem Lenkrad nicht mitdrehende Komponenten übertragen werden. Wickelfedern sind in der Regel als Flachbandkabel ausgebildet, die schneckenförmig um die Drehachse der Lenksäule bzw. des Lenkrades aufgewickelt sind. Bekannte Lenkstockmodule umfassen außerdem Achsversatzausgleichsmittel, die einen Achsersatz der Längsachse der Lenksäule zu der Drehachse eines Rotors einer Wickelfeder oder eines Lenkwinkelsensors ausgleichen.

Zur Befestigung des Lenkstockmoduls am Mantelrohr des Lenkstocks ist es bekannt, Befestigungsschellen vorzusehen, die über eine Stellschraube zugezogen werden können. Dies hat den Nachteil, dass in radialer Richtung wirkende Kräfte nicht gleichmäßig über den Umfang verteilt auftreten. Daraus resultieren ungleichmäßige Materialbeanspruchungen, die zu frühzeitigen Materialermüdungen führen können. Außerdem ist ein positionsgenaues, exakt zentrisches Anordnen des Lenkstockmoduls zur Längsachse des Mantelrohrs nicht, bzw. nur mit zusätzlichen Zentriermitteln möglich.

Weiterhin ist aus DE-A-100 51 226 eine Zentrierhülse mit einer Refestigungsvorrichtung zur Festlegung des Lenkstockschalters am Mantelrohr bekannt.

Der vorliegenden Erfindung liegt deshalb die Aufgabe zugrunde, eine Befestigungseinrichtung zur Befestigung eines Längsstocksmoduls an dem Mantelrohr vorzuschlagen, die den Nachteilen des Standes der Technik abhilft. Insbesondere soll eine einfache, sichere und dauerhafte Befestigung des Lenkstockmoduls erreicht werden.

Diese Aufgabe wird gelöst durch eine Befestigungseinrichtung mit einem zwischen dem Mantelrohr und einem Befestigungsabschnitt des Lenkstocksmoduls anordenbaren, hülsenartigen Klemmelement, das Keilabschnitte zur Keilklemmung bei Drehung um die Längsachse mit wenigstens weitgehend parallel zur Längsachse verlaufenden Keilflächen aufweist. Beim Verdrehen des Klemmelements tritt auf beiden Seiten des Keilabschnitts vorteilhafterweise eine Linien- oder Flächenpressung gegen das Mantelrohr bzw. gegen den Befestigungsabschnitt auf. Die Keilabschnitte weisen im Querschnitt bzw. in Richtung der Längsachse betrachtet ein Keilprofil auf. Die Klemmelemente können mittelbar und/oder unmittelbar an dem Mantelrohr und/oder dem entsprechenden Befestigungsabschnitt anliegen. Dabei können Zwischenelemente zwischen dem Klemmelement und dem Mantelrohr bzw. dem Befestigungsabschnitt vorhanden sein. Das Mantelrohr kann als die Lenksäule wenigstens abschnittsweises umgebendes Lenksäulenmantelrohr ausgebildet sein. Es kann auch als separates, an dem Lenksäulenmantelrohr anordenbares Bauteil vorgesehen sein. Durch die Keilklemmung kann zum einen eine Verdrehsicherung des Lenkstockmoduls gegenüber dem Mantelrohr und zum anderen eine Sicherung in axialer Richtung erreicht werden.

Vorteilhafterweise sind die Keilabschnitt wenigstens weitgehend identisch und gleichmäßig über den Umfang des Klemmelements verteilt angeordnet. Hierdurch kann eine Selbstzentrierung des Lenkstockmoduls beim Verdrehen des Keilelements zur Längsachse des Mantelrohrs bzw. der Lenksäule erfolgen. Eine gute Selbstzentrierung ergibt sich dann, wenn insgesamt drei Keilabschnitte vorgesehen sind. Aufgrund der Selbstzentrierung können Achsversatzausgleichsmittel entfallen, die einen Achsversatz beispielsweise am Lenksäulen- beziehungsweise lenkradseitigen Rotor einer Wickelfeder oder eines Lenkwinkelsensors gegenüber einem am Lenkstockmodul angeordneten oder durch das Lenkstockmodul gebildeten Stator ausgleichen.

Das Klemmelement und/oder das Mantelrohr kann einen wenigstens teilweise offenen oder geschlossenen Querschnitt aufweisen. Beispielsweise können zur Realisierung einer wenigstens bedingten Nachgiebigkeit in radialer Richtung Längsschlitze vorgesehen sein.

Bei einer weiteren Ausführungsform der Erfindung ist vorgesehen, dass sich die Keilabschnitte wenigstens weitgehend über die gesamte Länge des Klemmelements erstrecken. Dabei sind die Keilabschnitte vorzugsweise gleich lang wie mit den Keilsabschnitten korrespondierende Führungsflächen am Mantelrohr. Hierdurch wird eine Verkippungsgefahr des Lenkstockmoduls gegenüber dem Mantelrohr unterbunden. Außerdem wird die Fläche bzw. Linie, mit der eine Flächen- bzw. Linienpressung erfolgt, vergrößert.

Das Klemmelement kann so ausgebildet sein, dass die radial innenliegende Innenfläche des Klemmelements einen kreisrunden Querschnitt aufweist. Das Klemmelement ist vorteilhafterweise über diesen kreisrunden Querschnitt, der das Mantelrohr umgibt, auf das Mantelrohr aufschiebbar.

Erfindungsgemäß ist ferner denkbar, dass die Keilabschnitte auf der radial außen liegenden Außenfläche des Klemmelements angeordnet sind.

Um ausreichend große Klemmkräfte bei einer vergleichsweise geringen Verdrehung des Klemmelements realisieren zu können, ist vorteilhafter Weise vorgesehen, dass die Keilabschnitte mit am Mantelrohr bzw. am Befestigungsabschnitt vorgesehenen Gegenkeilabschnitten korrespondieren. Die Gegenkeilabschnitte sind so ausgebildet, dass die Keilabschnitte des Klemmelements in axialer Richtung in die Gegenkeilabschnitte einführbar sind. Beim Verdrehen des Klemmelements wirken die jeweiligen Klemmflächen der Keilabschnitte gegen die Oberfläche der Gegenkeilabschnitte.

Besonders vorteilhaft ist, wenn die Keilflächen derart ausgebildet sind, dass eine wenigstens weitgehend homogene Flächenpressung oder Linienpressung auftritt. Hierdurch wird die Belastung gleichmäßig auf eine relativ große Fläche bzw. entlang einer Linie verteilt. Material schädigende Spannungsspitzen werden vermieden.

Eine weitere, besonders bevorzugte Ausführungsform der Erfindung ergibt sich dann, wenn die Keilflächen eine derart kleine Keilsteigung aufweisen, dass eine Selbsthemmung auftreten kann. Hierdurch wird ein ungewolltes, selbsttätiges Lösen des Lenkstockmoduls vom Mantelrohr unterbunden. Die Keilsteigung kann beispielsweise im Bereich von 1:50 bis 1:200 liegen.

Eine besonders bevorzugte Ausführungsform der Erfindung ergibt sich dann, wenn die Keilflächen im Querschnitt als exzentrisch zur Längsachse verlaufende Kreissegmente ausgebildet sind. Kreissegmente können fertigungstechnisch auf einfache Art und Weise realisiert werden. Außerdem haben sie den Vorteil, dass je nach Wahl des jeweiligen Radius schon bei geringfügigem Verdrehen des Klemmelements eine Klemmwirkung eintreten kann. Gerade dann, wenn die Gegenkeilabschnitte ebenfalls durch Kreissegmente gebildet werden, tritt eine vorteilhafte, definierte Linienpressung auf. Je nach Wahl des Kreismittelpunkts des jeweiligen Kreissegments und je nach Radius des Kreissegments entstehen mehr oder weniger steile Keilflächen.

Besonders vorteilhaft ist ferner, wenn die Keilflächen im Querschnitt als Segmente logarhythmitischer Spiralen ausgebildet sind. Bei einer derartigen Ausbildung der Keilabschnitte ergibt sich eine besonders vorteilhafte, homogene Flächenpressung über eine Vergleichsweise große Keilfläche.

Eine weitere bevorzugte Ausführungsform der Erfindung zeichnet sich dadurch aus, dass das Klemmelement zwischen den Keilabschnitten zentrisch zur Längsachse verlaufende Kreissegmentabschnitte aufweist. Die Kreissegmentabschnitte liegen folglich auf einer Kreisbahn um die Längsachse des Klemmelements. Das Vorsehen von Kreissegmentabschnitten hat den Vorteil, dass das Klemmelement beim Verdrehen um seine Längsachse im Bereich der Kreissegmentabschnitte geführt werden kann. Eine Keilklemmung tritt folglich nicht im Bereich der Kreissegmentabschnitt auf, sondern lediglich an den Keilabschnitten.

Eine vorteilhafte Ausführungsform ergibt sich dann, wenn im Querschnitt gesehen die Kreissegmentabschnitte je einen Winkel einschließen, der 2,5 bis 3,5 mal größer ist, als der Winkel, den die einzelnen Keilabschnitte einschließen. Der Bereich der Keilabschnitte ist folglich kleiner als der Bereich der Kreissegmentabschnitte. Hierdurch kann die zentrische Führung des Klemmelements verbessert werden, wobei die Keilabschnitte derart groß ausgebildet sind, dass eine ausreichende Keilklemmung gewährleistet wird.

Bei vorzugsweise drei vorzusehenden Keilabschnitten beträgt der Winkel, den ein Kreissegmentabschnitt einschließt, ca. 80° bis 110°. Der Winkel, den ein Keilabschnitt einschließt, beträgt vorteilhafterweise ca. 40° bis 20°. Besonders vorteilhafte Werte ergeben sich, wenn der Winkel des Kreissegmentabschnitts 90° beträgt und der Winkel des Keilabschnitts 30°.

Um eine Keilklemmung mit einer definierten Vorspannung zu erreichen, kann vorgesehen sein, dass das Klemmelement eine nutartige Ausnehmung aufweist, die sich in Längsrichtung erstreckt und an einen Keilabschnitt angrenzt. Vorteilhafterweise schließt sich an jeden Keilabschnitt eine derartige Ausnehmung an, und zwar an die jeweils steilere Flanke des Keilabschnitts. Dadurch wird eine gleichartige Nachgiebigkeit der Keilabschnitte gewährleistet, wodurch eine gute Selbstzentrierung erreicht wird.

Eine besonders vorteilhafte Nachgiebigkeit der Keilabschnitte ergibt sich dann, wenn sich die nutartigen Ausnehmungen auch auf der dem Mantelrohr abgewandten Seite in Umfangsrichtung erstrecken. Dabei können sich die Ausnehmungen insbesondere wenigstens über die Länge des jeweiligen Keilabschnitts erstrecken. Hierdurch wird erreicht, dass eine elastische Verformung der Keilabschnitte entlang einer weitgehend parallel zur Längsachse verlaufenden Biegelinie erfolgen kann, so dass eine in axialer Richtung sehr gleichmäßige Linien- oder Flächenpressung erreicht wird.

Zur Verdrehung des Klemmelements um die Längsachse kann die radiale Außenseite des Klemmelements Verdrehmittel aufweisen, mit denen eine Verdrehung des Klemmelements ermöglicht werden kann. Vorteilhafterweise sind die Verdrehmittel in einem Bereich des Klemmelements angeordnet, über den sich die Keilflächen nicht erstrecken. Die Verdrehmittel können beispielsweise im Bereich einer freien Stirnkante des Klemmelements vorgesehen sein.

Vorteilhafterweise umfassen die Verdrehmittel eine Schraubenverzahnung, die zum Eingriff einer Gegenverzahnung eines Stellbolzens geeignet ist. Durch Vorsehen eines entsprechenden Stellbolzens, der beispielsweise quer zur Längsachse des Klemmelements angeordnet sein kann, kann ein Verdrehen des Klemmelements auf einfache Art und Weise realisiert werden. Der Stellbolzen, der Beispielsweise im Lenkstockmodul gelagert angeordnet sein kann, weist vorzugsweise einen Eingriffsabschnitt auf, in den bekannte Bolzendreher eingreifen können.

Erfindungsgemäß kann auch vorgesehen sein, dass die Verdrehmittel eine Aufnahme für eine Stellschraube derart umfassen, dass die Stellschraube senkrecht zur Längsachse aufgenommen wird und beim Verdrehen der Stellschraube das Klemmelement gegenüber dem Lenkstockmodul und dem Mantelrohr verdreht wird. Die Aufnahme weist dabei vorteilhafterweise ein Gewinde auf, in das die Stellschraube eingedreht werden kann. Die Stellschraube stützt sich gleichzeitig mit ihrem freien Ende an dem Lenkstockmodul ab. Durch Verdrehen der Stellschraube verdreht sich folglich das Klemmelement um die Längsachse, während sich die Stellschraube am Lenkstockmodul abstützt.

Um eine ausreichende Linien- beziehungsweise Flächenpressung zu erreichen, kann erfindungsgemäß vorgesehen sein, dass der Befestigungsabschnitt auf der radial außenliegenden, dem Klemmelement abgewandten Außenseite ein Kraftaufnahmemittel zur Aufnahme der beim Verdrehen des Klemmelements auftretenden radialen Kräfte aufweist. Das Kraftaufnahmemittel leistet folglich Widerstand gegen eine Verformung des Befestigungsabschnitts.

Dabei kann vorgesehen sein, dass die Außenseite des Befestigungsabschnitts im Querschnitt kreisförmig ausgebildet ist. Das Kraftaufnahmemittel kann dann als ein die Außenseite umgebender Metallring ausgebildet sein.

Die eingangs genannte Aufgabe wird außerdem durch ein Lenkstockmodul gelöst, das eine erfindungsgemäße Befestigungseinrichtung umfasst. Insbesondere kann das Lenkstockmodul neben dem Klemmelement auch den Stellbolzen und den Metallring umfassen.

Weitere Einzelheiten und vorteilhafte Ausgestaltungen der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine perspektivische Explosionsdarstellung eines erfindungsgemäßen Lenkstockmoduls,
- Figur 2: einen Querschnitt durch die Befestigungseinrichtung des Lenkstockmoduls gemäß Figur 1 in einer Vormontageposition,
- Figur 3: den Querschnitt gemäß Figur 2 in der Endmontageposition,
- Figur 4: die Vorderansicht des Lenkstockmoduls gemäß Figur 1,
- Figur 5: einen Querschnitt durch ein Kreiskeil-Profil,
- Figur 6: eine perspektivische Explosionsdarstellung eines zweiten erfindungsgemäßen Lenkstockmoduls,
- Figur 7: eine andere Ansicht des Lenkstockmoduls gemäß Figur 6,
- Figur 8: einen Querschnitt durch die Befestigungseinrichtung des Lenkstockmoduls gemäß Figur 6 und 7,
- Figur 9: das Klemmelement der Befestigungseinrichtung des Lenkstockmoduls gemäß Figur 6 und 7,
- Figur 10: eine perspektivische Ansicht des am Mantelrohr befestigten Lenkstockmoduls gemäß Figur 6 und 7 und
- Figur 11: eine Vorderansicht des Lenkstockmoduls gemäß Figur 10.

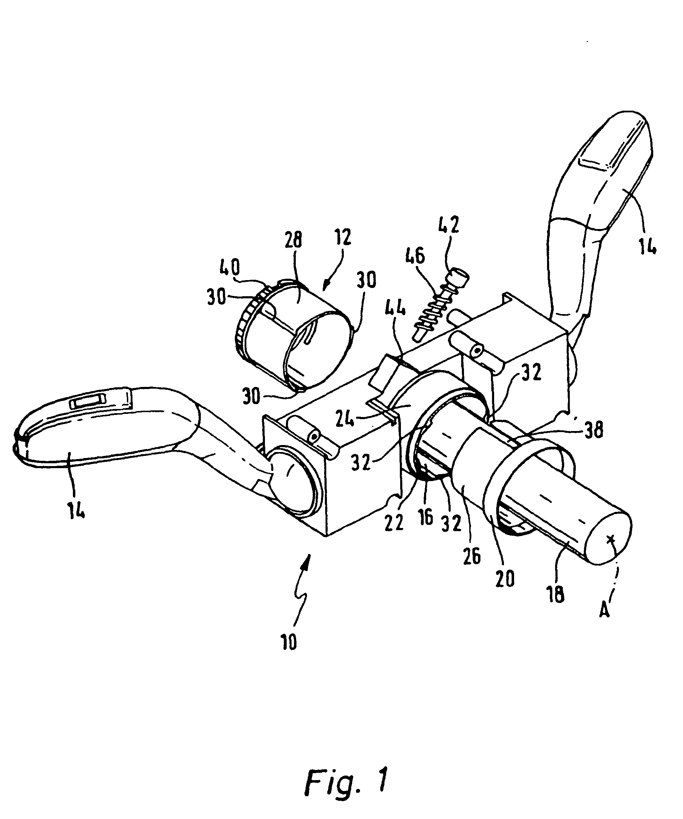

In der Figur 1 ist ein erfindungsgemäßes Lenkstockmodul 10 mit einer erfindungsgemäßen Befestigungseinrichtung 12 dargestellt. Das Lenkstockmodul 10 nimmt nicht dargestellte Schalter auf, die mittels dargestellten Schalthebeln 14 betätigbar sind. Das Lenkstockschaltermodul 10 umfasst einen zentralen Durchbruch 16, in den das eine Ende einer Lenksäule 18 ragt. Dieses Ende der Lenksäule ist im montierten Zustand mit einem nicht dargestellten Lenkrad drehfest verbunden. Die Lenksäule 18 wird im Bereich des Lenkstockmoduls 10 von einem Mantelrohr 20 umgeben.

Im oder am zentralen Durchbruch 16 kann ein Rotor einer Wickelfeder und/oder eines Lenkwinkelsensors drehbar gelagert angeordnet sein. Das Lenkstockmodul 10 weist einen Befestigungsabschnitt 22 zur Befestigung des Mantelrohrs 20 auf. Der Befestigungsabschnitt 22 wird auf der außenliegenden Seite von einem Metallring 24 umgeben. Zur Befestigung des Lenkstockmoduls 10 am Mantelrohr 20 wird der Befestigungsabschnitt 22 auf das freie Ende 26 des Mantelrohrs 20 aufgeschoben. Daran anschließend wird von der dem Mantelrohr abgewandten Seite 26 ein Klemmelement 28 zwischen das Mantelrohr 20 und den Befestigungsabschnitt 22 geschoben.

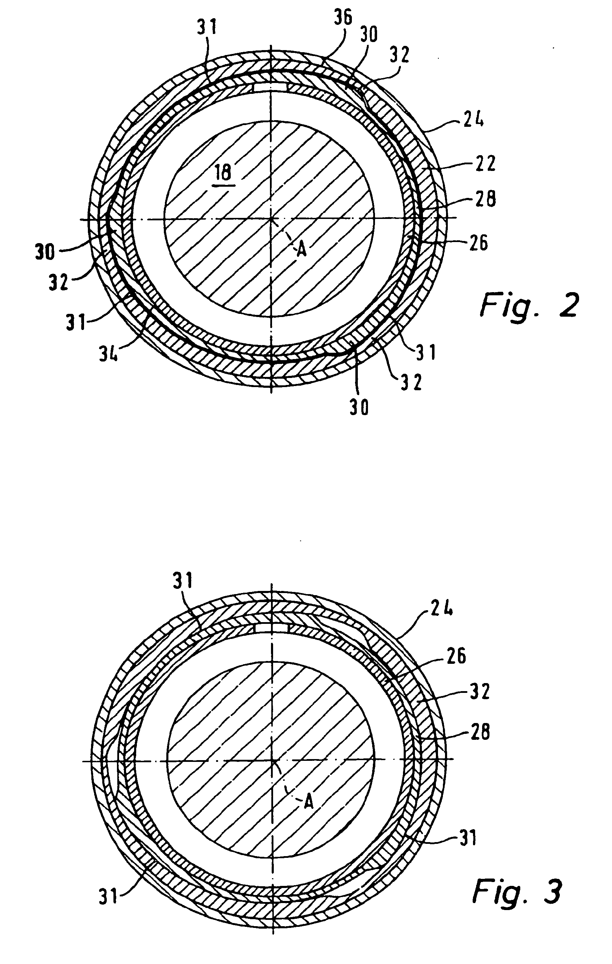

Aus dem in der Figur 2 gezeigten Querschnitt durch den Befestigungsabschnitt 22 des Lenkstockmoduls 10 wird deutlich, dass das Klemmelement auf der dem Befestigungsabschnitt 22 zugewandten radialen Außenseite drei identisch ausgebildete, gleichmäßig über den Umfang des Klemmelements 28 angeordnete Keilabschnitte 30 aufweist. Die drei Keilabschnitte 30 korrespondieren mit am Befestigungsabschnitt 22 vorgesehenen Gegenkeilabschnitten 32. Die Keilabschnitte 30 und die Gegenkeilabschnitte 32 sind komplementär zueinander ausgebildet. In der Vormontageposition, die in der Figur 2 dargestellt ist, können die Keilabschnitte 30 in axialer Richtung in die Gegenkeilabschnitte 32 eingeführt werden. Die Keilabschnitte 30 bzw. die Gegenkeilabschnitte 32 weisen Keilflächen 31 auf, die aus Segmenten von logarhythmischen Spiralen bestehen. Derartige Keilflächen sind in der Figur 5 exemplarisch an Kreiskeil-Profilen dargestellt.

Die radial innenliegende Innenfläche 34 des Klemmelements 28 weist einen kreisrunden, das Mantelrohr 26 umgebenden Querschnitt auf. Der hülsenartig ausgebildete Befestigungsabschnitt 22 weist auf der radial außenliegenden, dem Klemmelement 28 abgewandten Außenseite 36 einen kreisrunden Querschnitt auf, der von dem Metallring 24 umgeben ist. Zur Befestigung des Lenkstockmoduls 10 am Mantelrohr 20 wird das Klemmelement 28 in dem in der Figur 2 dargestellten Querschnitt entgegen dem Uhrzeigersinn in die in der Figur 3 dargestellten Endmontagelage verdreht.

Beim Verdrehen des Klemmelements 28 in die in der Figur 3 dargestellte Lage kommen die Keilflächen 31 der Keilabschnitte 30 und der Gegenkeilabschnitte 32 vollflächig zur gegenseitigen Anlage. Es wird eine großflächige, homogene Flächenpressung erzeugt. Die Keilsteigungen der Keilabschnitte 30, 32 sind so klein, dass eine Selbsthemmung auftritt. Folglich kann die Klemmverbindung auch in der Montagerichtung entgegengesetzter Richtung Momente übertragen. Aufgrund der gleichmäßig über den Umfang verteilten Anpresskräfte können außerdem axial wirkende Kräfte übertragen werden, wodurch eine zusätzliche Axialsicherung des Lenkstockmoduls 10 am Mantelrohr 12 entfallen kann. In der Endmontagestellung erhält man einen Querpressverband.

Der Metallring 24 nimmt die radial wirkenden Kräfte auf und verhindert eine unerwünschte Deformierung des Befestigungsabschnitts 22.

Das Mantelrohr 20 weist an seinem freien Ende 26 einen Längsschlitz 38 auf, der ein bedingt elastisches Nachgeben des Mantelrohrs 26 ermöglicht. Beim Verdrehen des Klemmelements 28 wirkt das Mantelrohr 20 aufgrund den auftretenden Radialkräften bedingt elastisch nachgiebig. Hierdurch ergibt sich eine gewisse Vorspannung.

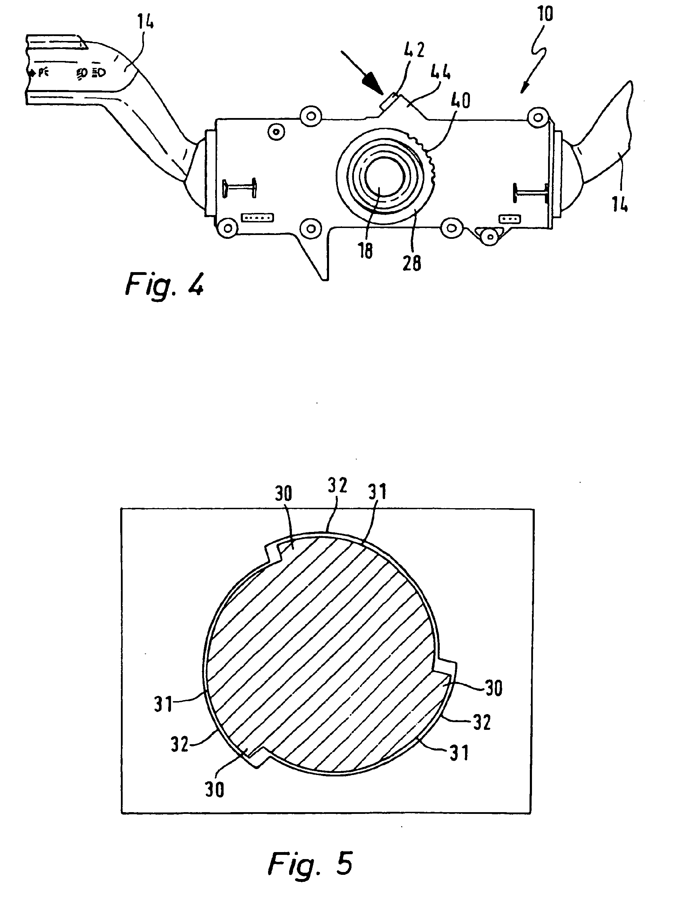

Zum Verdrehen des Keilelements weist das Keilelement 28 auf der radialen Außenseite einen Schraubenzahnabschnitt 40 auf, die in Figur 4 zu erkennen ist. Der Schraubenzahnabschnitt 40 wirkt mit einem Stellbolzen 42 zusammen. Der Stellbolzen 42 ist im montierten Zustand im Längsstockmodul 10 in einer Verdrehaufnahme 44 verdrehbar gelagert. Die Schraubenverzahnung 46 des Stellbolzens 42 steht in Eingriff mit dem Schraubenzahnabschnitt 40. Durch Verdrehen des Stellbolzens 42, beispielsweise mittels eines Schraubendrehers, wird über die Schraubenverzahnung 46 bzw. den Schraubenzahnabschnitt 40 das Klemmelement 28 verdreht.

Aufgrund der drei gleichmäßig über den Querschnitt verteilt angeordneten Keilabschnitten 30, 32 wird bei der Befestigung des Lenkstockmoduls 10 am Mantelrohr 20 das Lenkstockmodul 10 in Bezug auf die Längsachse A selbst zentriert. Dadurch können zusätzliche Achsversatzausgleichsmittel eines im zentralen Durchbruch 16 drehbar gelagerten Wickelfeder- und/oder Drehwickelsensorrotors entfallen.

Wie aus der Figur 1 deutlich wird, erstrecken sich die drei Keilabschnitte über weitgehend die gesamte Länge des Klemmelements 28. Dadurch wird einem Verkippen des Lenkstockmoduls 10 gegenüber dem Mantelrohr 20 entgegengewirkt.

Bei dem in der Figur dargestellten Ausführungsbeispiel wirkt das Klemmteil 28 einerseits unmittelbar gegen das Mantelrohr und andererseits unmittelbar gegen den Befestigungsabschnitt 22 des Lenkstockmoduls 10. Gemäß einer anderen Ausführungsform kann vorgesehen sein, dass zwischen dem Klemmteil 28 und dem Lenkstockmodul 10 bzw. dem Mantelrohr 20 Zwischenelemente, beispielsweise in Form von Hülsen, vorhanden sind.

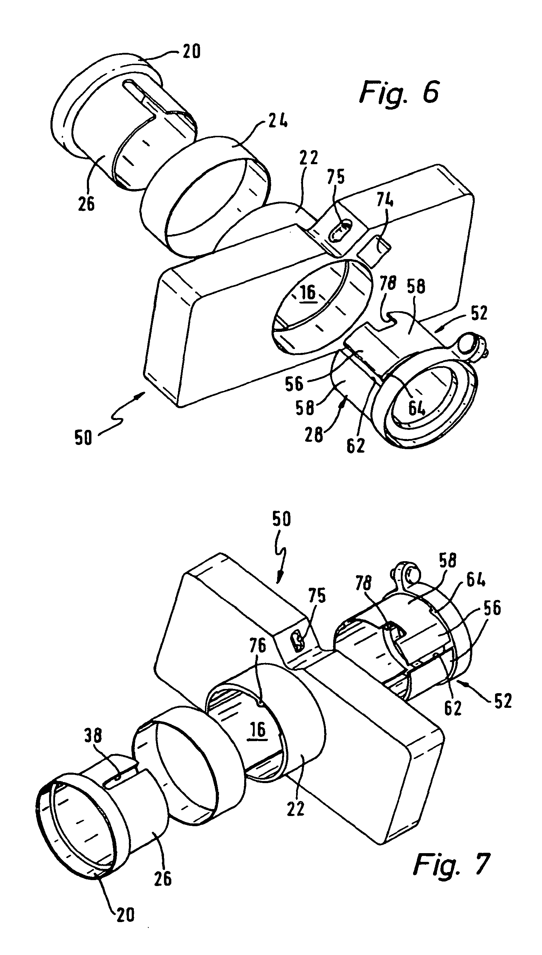

Die Figuren 6 bis 11 zeigen eine zweite erfindungsgemäße Ausführungsform. Den Figuren 1 bis 4 entsprechende Bauteile sind mit entsprechenden Bezugszeichen versehen.

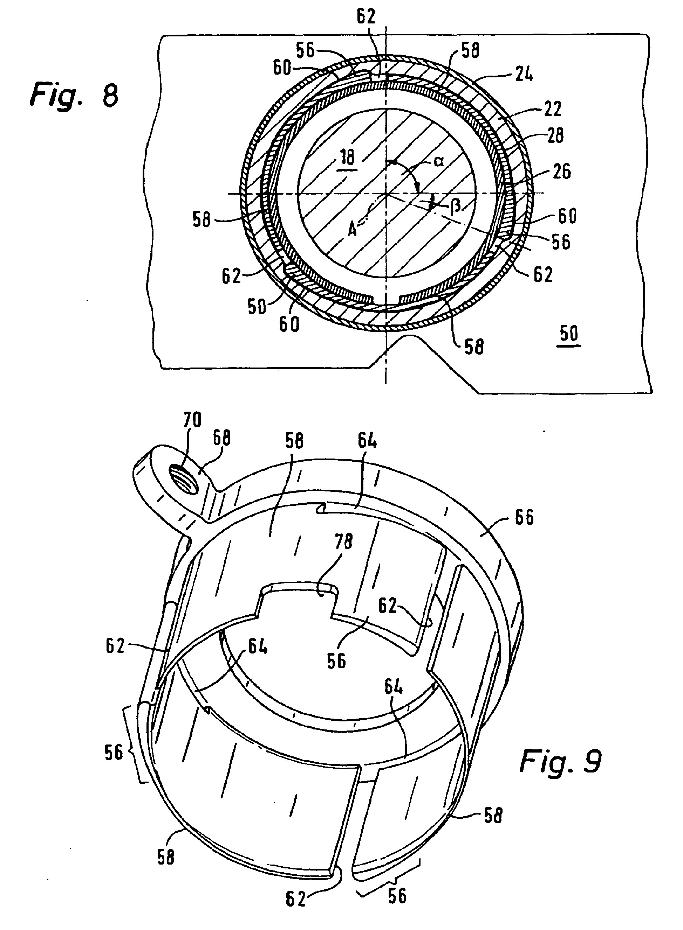

Die in den Figuren 6 bis 11 dargestellte Befestigungseinrichtung 52 zur Befestigung des Lenkstockmoduls 50 am Mantelrohr 20 umfasst ein Klemmelement 54, das zwischen zwei benachbarten Keilabschnitten 56 zentrisch zur Längsachse verlaufende Kreissegmentabschnitte 58 aufweist. Die Keilflächen sind dabei im Querschnitt betrachtet, wie in Figur 8 dargestellt, nicht als Segmente logarhythmischer Spiralen, sondern als Kreissegmente ausgebildet. Die einzelnen Keilabschnitte schließen im Querschnitt gesehen, wie in Figur 8 dargestellt, einen Winkel β von ca. 30° ein. Die einzelnen Kreissegmentabschnitte 58 schließen einen Winkel α von ca. 90° ein.

Die dem Klemmelement 54 zugewandte Seite des Befestigungsabschnitts 22 weist Gegenkeilabschnitte 60 auf, die ebenfalls eine kreissegmentförmige Oberfläche aufweisen. Der Radius dieser Oberflächen kann dem Radius der Keilabschnitte 56 entsprechen. Eine vorteilhafte Ausführungsform ergibt sich allerdings dann, wenn der Radius der Oberflächen der Gegenkeilabschnitte 60 verschieden von dem Radius der Keilabschnitte 56 ist.

Durch das Vorsehen von kreissegmentförmigen Keilflächen wird erreicht, dass eine Linienpressung zwischen den Keilabschnitten 56 und den Gegenkeilabschnitten 60 erreicht wird.

In den Figuren 6 bis 9 ist zu erkennen, dass angrenzend an einen Keilabschnitt eine sich in Längsrichtung erstreckende nutartige Ausnehmung 62 im Klemmelement 54 vorgesehen ist. Da sich an jeden Keilabschnitt 56 eine Ausnehmung 62 anschließt, sind insgesamt drei Ausnehmungen 62 vorhanden. Die nutartigen Ausnehmungen 62 erstrecken sich auf der dem Mantelrohr 20 abgewandten Seite auch in Umfangsrichtung. Der Abschnitt der Ausnehmungen, der sich in Umfangsrichtung erstreckt, ist in den Figuren mit 64 gekennzeichnet. Durch Vorsehen der Ausnehmungen 62 und insbesondere des Abschnitts 64 wird eine gleichförmige Nachgiebigkeit der Keilabschnitte 56 in Richtung der Längsachse erreicht. Ein Anliegen entlang einer Linie, unter einer definierten Vorspannung, kann damit gewährleistet werden. Eine elastische Verformung der Keilabschnitte im Übergangsbereich von den Kreissegmentabschnitten 58 zu den Keilabschnitten 60 kann hierbei auftreten.

Durch die Nachgiebigkeit der Keilabschnitte in radialer Richtung wird gewährleistet, dass ein Beschädigen der Keilabschnitte auch bei zu weitem Verdrehen der Klemmelemente 54 nicht erfolgen kann. Eine Verdrehung kann beispielsweise bis an einen definierten Anschlag erfolgen.

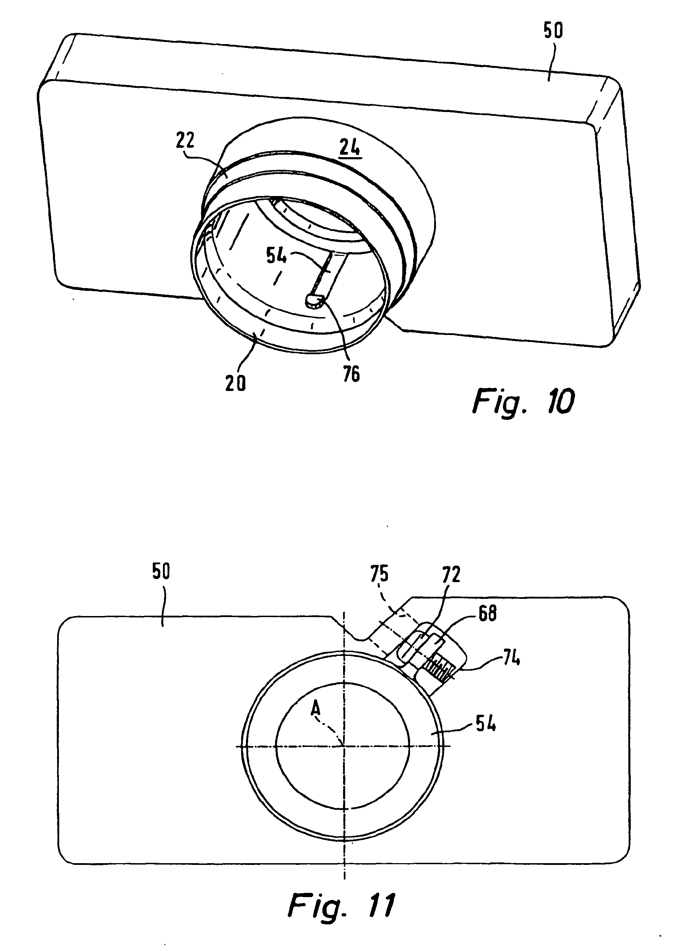

Zur Verdrehung des Klemmelements 54 ist an dem Klemmelement 54 ein umlaufender Bund 66 mit einer Schraubenaufnahme 68 vorgesehen. Die Schraubenaufnahme 68 umfasst eine senkrecht zur Längsachse verlaufende Gewindebohrung 70, in die eine in der Figur 11 dargestellte Stellschraube 72 eingeschraubt werden kann. Im montierten Zustand stützt sich das freie Ende der Stellschraube 72 an einer Abstützung 74 des Lenkstockmoduls 50 ab. Durch Verdrehen der Schraube 72 bewegt sich die Schraubenaufnahme 68 derart, dass das Klemmelement 54 gegen das Lenkstockmodul 50 um seine Längsachse verdreht wird. Im Lenkstockmodul 50 ist eine Aussparung 76 vorgesehen, durch die die Stellschraube 72 zugänglich ist und verdreht werden kann.

Der Längsschlitz 38 im Mantelrohr 20 ist dafür vorgesehen, dass das Lenkstockmodul 50 in einer definierten Position montiert werden kann. Das Lenkstockmodul 50 sieht dazu einen Positionierzapfen 76 vor, der, wie in Figur 10 dargestellt, im montierten Zustand in den Längsschlitz 38 eingreift. Damit das Klemmelement 54 ohne Behinderung durch den Positionierzapfen 76 möglichst weit auf das freie Ende 26 des Mantelrohrs 20 aufgeschoben werden kann, weist es eine Ausnehmung 78 auf.

Eine nicht dargestellte Ausführungsform der Erfindung kann vorsehen, dass die Verdrehmittel derart ausgebildet sind, dass beim axialen Einführen des Klemmelements in den zentralen Durchbruch 16 über entsprechende Führungsmittel ein Verdrehen des Klemmelements erfolgen kann. Beispielsweise können an dem Klemmelement Führungszapfen vorgesehen sein, die in an dem Befestigungsabschnitt vorgesehen Führungsbahnen eingreifen. Die Führungsbahnen können so ausgebildet sein, dass sie eine Zwangsverdrehung des Klemmelements bewirken, wenn dieses in axialer Richtung in den zentralen Durchbruch 16 eingeführt wird.

Um die Endlage des Klemmelements 54 zu sichern, können entsprechende Sicherungsmittel vorgesehen sein. Derartige Sicherungsmittel können beispielsweise als Rast- oder Klemmelemente ausgebildet sein.

## Patentansprüche

1. Befestigungseinrichtung (12, 52) zur Befestigung eines Lenkstockmoduls (10) an dem Mantelrohr (20) eines Lenkstocks, mit einem zwischen dem Mantelrohr (20) und einem Befestigungsabschnitt (22) des Lenkstockmoduls (10) anordenbaren, hülsenartigen Klemmelement (28, 54), das Keilabschnitte (30, 56) mit wenigstens weitgehend parallel zur Längsachse verlaufenden Keilflächen (31) zur Keilklemmung bei Drehung um die Längsachse aufweist.

2. Befestigungseinrichtung (12, 52) nach Anspruch 1, **dadurch gekennzeichnet, dass** die Keilabschnitte (30, 56) wenigstens weitgehend identisch und gleichmäßig über den Umfang des Klemmelements (28, 54) verteilt angeordnet sind.

3. Befestigungseinrichtung (12, 52) nach Anspruch 1 oder 2, **dadurch gekennzeichnet, dass** das Klemmelement (28, 54) und/oder das Mantelrohr (20) einen wenigstens teilweise offenen oder geschlossenen Querschnitt aufweist.

4. Befestigungseinrichtung (12, 52) nach Anspruch 1, 2 oder 3, **dadurch gekennzeichnet, dass** sich die Keilabschnitte (30) wenigstens weitgehend über die gesamte Länge des Klemmelements (28, 54) erstrecken.

5. Befestigungseinrichtung (12, 52) nach einem der vorhergehenden Ansprüche, **dadurch gekennzeichnet, dass** die radial innen liegende Innenfläche (34) des Klemmelements (28, 54) einen kreisrunden Querschnitt aufweist.

6. Befestigungseinrichtung (12, 52) nach einem der vorhergehenden Ansprüche, **dadurch gekennzeichnet, dass** die Keilabschnitte (30) auf der radial außen liegenden Außenfläche des Klemmelements (28) angeordnet sind.

7. Befestigungseinrichtung (12 52) nach einem der vorhergehenden Ansprüche, **dadurch gekennzeichnet, dass** die Keilabschnitte (30, 56) mit am Mantelrohr (20) beziehungsweise am Befestigungsabschnitt (22) angeordneten, wenigstens weitgehend komplementären Gegenkeilabschnitten (32, 60) korrespondieren.

8. Befestigungseinrichtung (12, 52) nach einem der vorhergehenden Ansprüche, **dadurch gekennzeichnet, dass** die Keilflächen (31) derart ausgebildet sind, dass eine wenigstens weitgehend homogene Flächenpressung oder Linienpressung auftritt.

9. Befestigungseinrichtung (12, 52) nach einem der vorhergehenden Ansprüche, **dadurch gekennzeichnet, dass** die-Keilflächen (31) eine derart kleine Keilsteigung aufweisen, dass eine Selbsthemmung auftreten kann.

10. Befestigungseinrichtung (12, 52) nach einem der vorhergehenden Ansprüche, **dadurch gekennzeichnet, dass** die Keilflächen (31) im Querschnitt als exzentrisch zur Längsachse (A) verlaufende Kreissegmente ausgebildet sind.

11. Befestigungseinrichtung (12) nach einem der vorhergehenden Ansprüche 1 bis 9, **dadurch gekennzeichnet, dass** die Keilflächen (31) im Querschnitt als Segmente logarithmischer Spiralen ausgebildet sind.

12. Befestigungseinrichtung (52) nach einem der vorhergehenden Ansprüche, **dadurch gekennzeichnet, dass** das Klemmelement (54) zwischen den Keilabschnitten zentrisch zur Längsachse verlaufende Kreissegmentabschnitte (58) aufweist.

13. Befestigungseinrichtung (52) nach Anspruch 12, **dadurch gekennzeichnet, dass** im Querschnitt gesehen die Kreissegmentabschnitte (58) je einen Winkel (α) einschleißen, der 2,5 bis 3,5 mal größer ist, als der Winkel (β), den die einzelnen Keilabschnitte (56) einschließen.

14. Befestigungseinrichtung (52) nach Anspruch 12 oder 13, **dadurch gekennzeichnet, dass** ein Kreissegmentabschnitt (58) einen Winkel (α) von 80° bis 110° einschließt und dass ein Keilabschnitt (56) einen Winkel (β) von 40° bis 20 ° einschließt.

15. Befestigungseinrichtung (52) nach einem der vorhergehenden Ansprüche, **dadurch gekennzeichnet, dass** angrenzend an einen Keilabschnitt (56) eine sich in Längsrichtung erstreckende nutartige Ausnehmung (62) vorgesehen ist.

16. Befestigungseinrichtung nach den Anspruch 12 oder 15, **dadurch gekennzeichnet, dass** die nutartige Ausnehmung (62) sich auch auf der dem Mantelrohr abgewandten Seite in Umfangsrichtung (64) erstreckt.

17. Befestigungseinrichtung (52) nach Anspruch 16, **dadurch gekennzeichnet, dass** sich die Ausnehmung (64) wenigstens über die Länge des Keilabschnitts (56) in Umfangsrichtung erstreckt.

18. Befestigungseinrichtung (12, 52) nach einem der vorhergehenden Ansprüche, **dadurch gekennzeichnet, dass** das Klemmelement (28, 54) auf der radialen Außenseite Verdrehmittel (40, 68) aufweist, mit denen eine Verdrehung des Klemmelements (28, 54) ermöglicht werden kann.

19. Befestigungseinrichtung (12) nach Anspruch 18, **dadurch gekennzeichnet, dass** die Verdrehmittel eine Schraubenverzahnung (40) umfassen, die zum Eingriff einer Gegenverzahnung (46) eines Stellbolzens (42) geeignet ist.

20. Befestigungseinrichtung (52) nach Anspruch 18, **dadurch gekennzeichnet, dass** die Verdrehmittel eine Aufnahme (68) für eine Stellschraube (72) derart umfassen, dass die Stellschraube senkrecht zur Längsachse (A) aufgenommen wird und beim Verdrehen der Stellschraube (72) das Klemmelement (54) gegenüber dem Lenkstockmodul (50) und dem Mantelrohr (20) verdreht wird.

21. Befestigungseinrichtung (12, 52) nach einem der vorhergehenden Ansprüche, **dadurch gekennzeichnet, dass** der Befestigungsabschnitt (22) auf der radial außen liegenden, dem Klemmelement abgewandten Außenseite (36) ein Kraftaufnahmemittel (24) zur Aufnahme der beim Verdrehen des Klemmelements (28) auftreten radialen Kräfte aufweist.

22. Befestigungseinrichtung (12) nach Anspruch 21, **dadurch gekennzeichnet, dass** die Außenseite (36) des Befestigungsabschnitts im Querschnitt kreisförmig ausgebildet ist.

23. Befestigungseinrichtung (12) nach Anspruch 21 oder 22, **dadurch gekennzeichnet, dass** Kraftaufnahmemittel als ein die Außenseite (36) umgebender Metallring (24) ausgebildet ist.

24. Lenkstockmodul (10) umfassend eine Befestigungseinrichtung (12) nach einem der vorhergehenden Ansprüche.

## Claims

1. A mounting device (12, 52) for mounting a steering column module (10) on the jacket tube (20) of a steering column, having a sleevelike clamping element (28, 54), which can be located between the jacket tube (20) and a mounting portion (22) of the steering column module (10) and which has wedge-shaped portions (30, 56) with wedge-shaped faces (31), extending at least largely parallel to the longitudinal axis, for wedge clamping upon rotation about the longitudinal axis.

2. The mounting device (12, 52) as defined by claim 1, **characterized in that** the wedge-shaped portions (30, 56) are distributed at least largely identically and uniformly over the circumference of the clamping element (28, 54).

3. The mounting device (12, 52) as defined by claim 1 or 2, **characterized in that** the clamping element (28, 54) and/or the jacket tube (20) has an at least partly open or closed cross section.

4. The mounting device (12, 52) as defined by claim 1, 2 or 3, **characterized in that** the wedge-shaped portions (30) extend at least largely over the entire length of the clamping element (28, 54).

5. The mounting device (12, 52) as defined by one of the foregoing claims, **characterized in that** the radially inner inside face (34) of the clamping element (28, 54) has a circular cross section.

6. The mounting device (12, 52) as defined by one of the foregoing claims, **characterized in that** the wedge-shaped portions (30) are located on the radially outer outside face of the clamping element (28).

7. The mounting device (12, 52) as defined by one of the foregoing claims, **characterized in that** the wedge-shaped portions (30, 56) correspond with at least largely complementary counterpart wedge-shaped portions (32, 60) located on the jacket tube (20) and on the mounting portion (22), respectively.

8. The mounting device (12, 52) as defined by one of the foregoing claims, **characterized in that** the wedge-shaped faces (31) are embodied such that an at least largely homogeneous pressure per unit of surface area or linear pressure occurs.

9. The mounting device (12, 52) as defined by one of the foregoing claims, **characterized in that** the wedge-shaped faces (31) have such a slight wedge slope that self-locking can occur.

10. The mounting device (12, 52) as defined by one of the foregoing claims, **characterized in that** the wedge-shaped faces (31) are embodied in cross section as circular segments extending eccentrically to the longitudinal axis (A).

11. The mounting device (12) as defined by one of the foregoing claims 1 through 9, **characterized in that** the wedge-shaped faces (31) are embodied in cross section as segments of logarithmic spirals.

12. The mounting device (52) as defined by one of the foregoing claims, **characterized in that** the clamping element (54), between the wedge-shaped portions, has circular segment portions (58) extending centrally to the longitudinal axis.

13. The mounting device (52) as defined by claim 12, **characterized in that** viewed in cross section, the circular segment portions (58) each form an angle (α) that is from 2.5 to 3.5 times larger than the angle (β) that the individual wedge-shaped portions (56) form.

14. The mounting device (52) as defined by claim 12 or 13, **characterized in that** a circular segment portion (58) forms an angle (α) of 80° to 110°, and that a wedge-shaped portion (56) forms an angle (β) of 40° to 20°.

15. The mounting device (52) as defined by one of the foregoing claims, **characterized in that** adjacent to a wedge- shaped portion (56), a groovelike recess (62) extending in the longitudinal direction is provided.

16. The mounting device (52) as defined by claim 12 or 15, **characterized in that** the groovelike recess (62), on the side facing away from the jacket tube, extends in the circumferential direction (64).

17. The mounting device (52) as defined by claim 16, **characterized in that** the recess (64) extends in the circumferential direction at least over the length of the wedge-shaped portion (56).

18. The mounting device (12, 52) as defined by one of the foregoing claims, **characterized in that** the clamping element (28, 54) has twisting means (40, 58) on the radial outside, with which twisting of the clamping element (28, 54) can be enabled.

19. The mounting device (12) as defined by claim 18, **characterized in that** the twisting means include a helical set of teeth (40), which is suitable for engagement with a counterpart set of teeth (46) of an adjusting bolt (42).

20. The mounting device (12) as defined by claim 18, **characterized in that** the twisting means include a receptacle (68) for an adjusting screw (72), such that the adjusting screw is received perpendicular to the longitudinal axis (A), and upon twisting of the adjusting screw (72), the clamping element (54) is twisted relative to the steering column module (50) and to the jacket tube (20).

21. The mounting device (12, 52) as defined by one of the foregoing claims, **characterized in that** the mounting portion (22), on the radially outer outside face (36), facing away from the clamping element, has a force-absorbing means (24) for receiving the radial forces that occur upon twisting of the clamping element (28).

22. The mounting device (12) as defined by claim 21, **characterized in that** the outside (36) of the mounting portion is embodied as circular in cross section.

23. The mounting device (12) as defined by claim 21 or 22, **characterized in that** the force-absorbing means is embodied as a metal ring (24) surrounding the outside (36).

24. A steering column module (10), including a mounting device (12) as defined by one of the foregoing claims.

## Revendications

1. Dispositif de fixation (12, 52) pour la fixation d'un module de commande (10) sur le tube extérieur (20) d'une colonne de direction, comportant un élément de serrage (28, 54) en forme de manchon, qui est destiné à être agencé entre le tube extérieur (20) et une partie de fixation (22) du module de commande (10) et qui comporte des parties en clavette (30, 56) avec des surfaces de calage (31) au moins en grande partie parallèles à l'axe longitudinal pour un serrage par calage lors d'une rotation autour de l'axe longitudinal.

2. Dispositif de fixation (12, 52) selon la revendication 1, **caractérisé en ce que** les parties en clavette (30, 56) sont agencées en étant réparties au moins en grande partie identiquement et uniformément sur le pourtour de l'élément de serrage (28, 54).

3. Dispositif de fixation (12, 52) selon la revendication 1 ou 2, **caractérisé en ce que** l'élément de serrage (28, 54) et/ou le tube extérieur (20) ont une section au moins partiellement ouverte ou fermée.

4. Dispositif de fixation (12, 52) selon la revendication 1, 2 ou 3, **caractérisé en ce que** les parties en clavette (30) s'étendent au moins en grande partie sur toute la longueur de l'élément de serrage (28, 54).

5. Dispositif de fixation (12, 52) selon l'une quelconque des revendications précédentes, **caractérisé en ce que** la face intérieure (34) de l'élément de serrage (28, 54), située radialement à l'intérieur, a une section ronde.

6. Dispositif de fixation (12, 52) selon l'une quelconque des revendications précédentes, **caractérisé en ce que** les parties en clavette (30) sont agencées sur la face extérieure de l'élément de serrage (28), située radialement à l'extérieur.

7. Dispositif de fixation (12, 52) selon l'une quelconque des revendications précédentes, **caractérisé en ce que** les parties en clavette (30, 56) coopèrent avec des parties en contre-clavette (32, 60) au moins en grande partie complémentaires, agencées sur le tube extérieur (20), plus précisément la partie de fixation (22).

8. Dispositif de fixation (12, 52) selon l'une quelconque des revendications précédentes, **caractérisé en ce que** les surfaces de calage (31) sont conçues de telle sorte qu'il se produit un pressage par surface au moins en grande partie homogène ou un pressage par ligne.

9. Dispositif de fixation (12, 52) selon l'une quelconque des revendications précédentes, **caractérisé en ce que** les surfaces de calage (31) ont une petite pente de calage, de telle sorte qu'il peut se produire un autoblocage.

10. Dispositif de fixation (12, 52) selon l'une quelconque des revendications précédentes, **caractérisé en ce que** les surfaces de calage (31) sont réalisées sous forme de segments de cercle qui, par référence à une coupe transversale, sont excentrés par rapport à l'axe longitudinal (A).

11. Dispositif de fixation (12) selon l'une quelconque des revendications 1 à 9, **caractérisé en ce que** les surfaces de calage (31) sont réalisées, par référence à une coupe transversale, sous forme de segments de spirales logarithmiques.

12. Dispositif de fixation (52) selon l'une quelconque des revendications précédentes, **caractérisé en ce que** l'élément de serrage (54) comporte des parties en segments de cercle (58) qui s'étendent entre les parties en clavette en étant centrées par rapport à l'axe longitudinal.

13. Dispositif de fixation (52) selon la revendication 12, **caractérisé en ce que**, par référence à une coupe transversale, les parties en segments de cercle (58) forment chacune un angle (α), qui est 2,5 à 3,5 fois supérieur à l'angle (β) qui est formé par les différentes parties en clavette (56).

14. Dispositif de fixation (52) selon la revendication 12 ou 13, **caractérisé en ce qu'**une partie en segment de cercle (58) forme un angle (α) de 80° à 110° et **en ce qu'**une partie en clavette (56) forme un angle (β) de 40° à 20°.

15. Dispositif de fixation (52) selon l'une quelconque des revendications précédentes, **caractérisé en ce qu'**il est prévu un évidement (62) en forme de rainure, orienté dans le sens longitudinal et adjacent à une partie en clavette (56).

16. Dispositif de fixation (52) selon la revendication 12 ou 15, **caractérisé en ce que** l'évidement (62) en forme de rainure s'étend dans le sens périphérique (64) également sur le côté opposé au tube extérieur.

17. Dispositif de fixation (52) selon la revendication 16, **caractérisé en ce que** l'évidement (64) s'étend dans le sens périphérique au moins sur la longueur de la partie en clavette (56).

18. Dispositif de fixation (12, 52) selon l'une quelconque des revendications précédentes, **caractérisé en ce que** l'élément de serrage (28, 54) comporte, sur la face extérieure radiale, des moyens de rotation (40, 68) qui permettent de faire tourner l'élément de serrage (28, 54).

19. Dispositif de fixation (12) selon la revendication 18, **caractérisé en ce que** les moyens de rotation sont formés par une denture hélicoïdale (40), qui est destinée à engrener avec une denture complémentaire (46) d'un boulon de réglage (42).

20. Dispositif de fixation (52) selon la revendication 18, **caractérisé en ce que** les moyens de rotation sont formés par un logement (68) pour une vis de réglage (72), de telle sorte que la vis de réglage est reçue perpendiculairement à l'axe longitudinal (A) et que, au moment de la rotation de la vis de réglage (72), l'élément de serrage (54) est entraîné en rotation par rapport au module de commande (50) et au tube extérieur (20).

21. Dispositif de fixation (12, 52) selon l'une quelconque des revendications précédentes, **caractérisé en ce que** la partie de fixation (22), sur la face extérieure (36) opposée à l'élément de serrage et située radialement à l'extérieur, comporte un moyen d'absorption de force (24) destiné à absorber les forces radiales générées pendant la rotation de l'élément de serrage (28).

22. Dispositif de fixation (12) selon la revendication 21, **caractérisé en ce que** la face extérieure (36) de la partie de fixation est circulaire par référence à une coupe transversale.

23. Dispositif de fixation (12) selon la revendication 21 ou 22, **caractérisé en ce que** le moyen d'absorption de force est réalisé sous forme de bague métallique (24) entourant la face extérieure (36).

24. Module de commande (10) comportant un dispositif de fixation (12) selon l'une quelconque des revendications précédentes.
